# EUROPEAN PATENT SPECIFICATION

(11) **EP 3 599 202 B1**
(45) Date of publication and mention of the grant of the patent: **20.09.2023**
(21) Application number: 19188923.7
(22) Date of filing: 29.07.2019
(51) Int. Cl.: B66B 3/00

(54) **ELEVATOR CALL REQUEST DEVICE AND DISPLAY CONTROL METHOD THEREOF**
AUFZUGSRUFANFORDERUNGSVORRICHTUNG UND ANZEIGESTEUERUNGSVERFAHREN DAFÜR
DISPOSITIF DE DEMANDE D'APPEL D'ASCENSEUR ET SON PROCÉDÉ DE COMMANDE D'AFFICHAGE

(30) Priority: 27.07.2018 CN 201810842347
(43) Date of publication of application: 29.01.2020
(73) Proprietor: Otis Elevator Company, Farmington, Connecticut 06032 (US)
(72) Inventor: QIU, Heping, Shanghai, Shanghai 201203 (CN); LIU, Tan, Shanghai, Shanghai 201203 (CN)
(74) Representative: Dehns

(56) References cited:
- CN-U- 202 643 012
- JP-A- 2011 168 385
- JP-A- 2017 222 470
- JP-A- 2018 002 390

## Description

### FIELD OF THE INVENTION

The present invention relates to technical field of elevators, in particular to display parameter control of an elevator call request device.

### BACKGROUND OF THE INVENTION

An elevator call request device, such as a Destination Entry Terminal (DET), is usually installed in the landing area for an elevator system in each floor; by means of the elevator call request device, a passenger can perform operations for elevator call request, for example, the passenger can perform the operation of entering a call request command by entering a destination floor on the DET.

Generally speaking, the elevator call request device provides a touch display screen for passengers to enter call request command. At present, the display control for the touch display screen does not take into account the regularity of use of each elevator call request device, and the display control mode is relatively simplistic, for example, centrally making display control with the same display parameters (such as the same brightness) through the cloud .

JP 2017 222 470 A describes a group management elevator system which includes a destination floor input device provided in an elevator hall. According to a traffic condition determined by the group management control system, one of two operation modes for the display of the destination floor input device is set.

### SUMMARY OF THE INVENTION

According to a first aspect of the present invention, an elevator call request device is provided, which comprises a touch display screen which is provided to passengers for performing an entry operation of call request command; wherein the elevator call request device further comprises:
a statistical analysis module, which is configured to count the number of entry operations that have been performed by time so as to obtain historical operation statistics; and
a display control module, which is configured to dynamically control display parameters of the touch display screen by time based on the historical operation statistics.

In the elevator call request device according to one embodiment of the present invention, the display parameters include one or several of brightness, contrast, display color.

In the elevator call request device according to another embodiment of the present invention, the display control module is further configured to dynamically control display contents of the touch display screen by time based on the historical operation statistics.

In the elevator call request device according to another embodiment of the present invention, the historical operation statistics include daily historical operation statistics, and the daily historical operation statistics include daily peak use period and daily trough use period.

In the elevator call request device according to another embodiment of the present invention, the display control module is further configured to dynamically control display parameters of the touch display screen by time based on the daily peak use period and daily trough use period.

In the elevator call request device according to another embodiment of the present invention, the display control module is further configured to control the touch display screen to display at a relatively high brightness during the daily peak use period and at a relatively low brightness during the daily trough use period.

In the elevator call request device according to another embodiment of the present invention, the statistical analysis module is further configured to count the number of entry operations that have been performed every day for a period of 0.5-1 hour in cluster so as to obtain daily historical operation statistics.

In the elevator call request device according to still another embodiment of the present invention, the statistical analysis module is further configured to periodically make the counting at a predetermined time to update the historical operation statistics.

In the elevator call request device according to yet another embodiment the present invention, the call request command includes destination floor information.

According to a second aspect of the present invention, an elevator system is provided, which comprises:
an elevator controller; and
one or a plurality of elevator call request devices according any of the above embodiments;
wherein, the elevator controller can receive the call request command entered from the elevator call request device.

In the elevator system according to one embodiment of the present invention, the plurality of elevator call request devices are installed in different landing areas of the elevator system, and the display control modules of each of the elevator call request devices dynamically control the display parameters of the touch display screens by time according to their own historical operation statistics.

According to a third aspect of the present invention, a display control method for the elevator call request device is provided in accordance with claim 10.

In the display control method according to one embodiment of the present invention, the display parameters include one or several of brightness, contrast, display color.

In the display control method according to another embodiment of the present invention, the display control step includes dynamically controlling display contents of the touch display screen by time based on the historical operation statistics.

In the display control method according to another embodiment of the present invention, the historical operation statistics include daily historical operation statistics, and the daily historical operation statistics include daily peak use period and daily trough use period.

In the display control method according to another embodiment of the present invention, the display control step includes dynamically controlling display parameters of the touch display screen by time based on the daily peak use period and daily trough use period.

In the display control method according to another embodiment of the present invention, the display control step includes controlling the touch display screen to display at a relatively high brightness during the daily peak use period and at a relatively low brightness during the daily trough use period.

In the display control method according to still another embodiment of the present invention, the statistical analysis step includes counting the number of entry operations that have been performed every day for a period of 0.5-1 hour in cluster so as to obtain daily historical operation statistics.

In the display control method according to yet another embodiment of the present invention, the statistical analysis step is periodically performed at a predetermined time to update the historical operation statistics.

The above features and operations of the present invention will become more obvious from the following descriptions and drawings.

### BRIEF DESCRIPTION OF THE DRAWINGS

The above and other objects and advantages of the present invention will become clearer and more complete from the following detailed descriptions given in conjunction with the drawings, wherein the same or similar elements are denoted by the same reference sign.
Fig. 1 is a schematic drawing of an elevator system according to an embodiment of the present invention, wherein a plurality of elevator call request devices according to an embodiment of the present invention are used.
Fig. 2 is a structural diagram of a elevator call request device according to an embodiment of the present invention.
Fig. 3 is a structural diagram of modules of a elevator call request device according to an embodiment of the present invention.
Fig. 4 is a schematic drawing of historical operation statistics obtained by elevator call request devices in different landing areas of the elevator system according to an embodiment of the present invention.
Fig. 5 is a flow chart of a display control method for the elevator call request device according to an embodiment of the present invention.

### DETAILED DESCRIPTION OF THE EMBODIMENT(S) OF THE INVENTION

The present invention will now be described more fully with reference to the accompanying drawings, which show exemplary embodiments of the present invention. However, the present invention can be implemented in many different forms and should not be construed as being limited to the embodiments described herein. Conversely, the embodiments are merely provided for making the present disclosure thorough and complete and for fully convey the concept of the present invention to those skilled in the art.

Some of the block diagrams shown in the drawings can be functional entities and do not necessarily correspond to physically or logically independent entities. These functional entities may be implemented in software form, or in one or more hardware modules or integrated circuits, or in different processing devices and/or micro-controller devices.

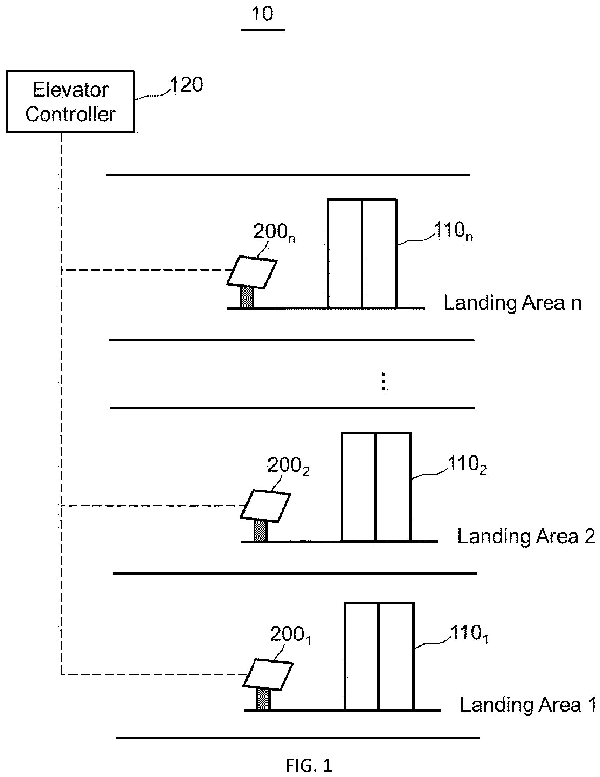

Fig. 1 is a schematic drawing of an elevator system according to an embodiment of the present invention, wherein a plurality of elevator call request devices 200 according to an embodiment of the present invention are used. As shown in Fig. 1, an elevator system 10 has an elevator controller 120 and an elevator car (not shown in the figure) for carrying passengers from one floor to another, a landing area is arranged corresponding to each floor, for example, landing area 1 to landing area n are arranged corresponding to floor 1 to floor *n* (*n* being an integer greater than or equal to 2), and landing door 110₁, and landing doors 110₂ to 110ₙ are arranged corresponding to landing area 1 and landing areas 2 to n.

The elevator system 10 also provides a driving device (not shown in the figure) to drive the elevator car to move or stop in the hoistway, wherein the elevator controller 120 can control running of the elevator car by controlling the driving device, for example, and the elevator controller 120 can also control each landing door 110 to open or close. Control instructions of the elevator controller 120 are generated based on the received elevator service request commands (e.g. call request commands) from each of the passengers.

To this end, the elevator system 10 has corresponding elevator call request devices 200 in corresponding landing areas, for example, a elevator call request device 200₁ is arranged in landing area 1, a elevator call request device 200₂ is arranged in a landing area 2, ..., and a elevator call request device 200ₙ is arranged in landing area n. Each elevator call request device 200 has a touch display screen 201, which has, for example, an interface for entering the call request command thereon to enable passengers to enter call request commands, e.g. a destination floor directly, so that the elevator controller 120 can obtain various call request commands from each elevator call request device 200 coupled thereto.

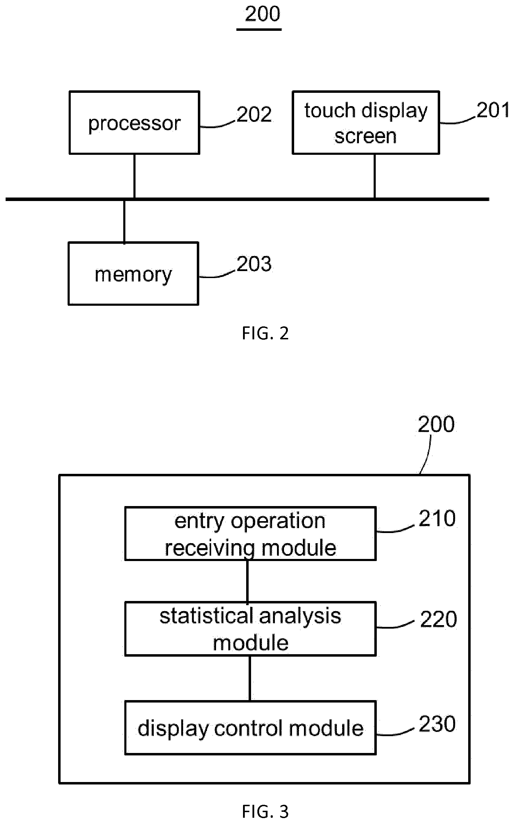

Fig. 2 is a structural diagram of a elevator call request device according to an embodiment of the present invention; Fig. 3 is a structural diagram of modules of a elevator call request device according to an embodiment of the present invention. According to both Fig. 2 and Fig. 3, the elevator call request device 200 comprises the touch display screen 201, a processor 202 and a memory 203, which are connected each other and are capable of intercommunication of data or instructions. The touch display screen 201 is provided to the passengers for performing operations of entering the call request commands, and the call request commands entered through the touch display screen 201 are received by an entry operation receiving module 210, thus used for statistics.

As shown in Fig. 3, the elevator call request device 200 further comprises a statistical analysis module 220, which is configured to count the number of entry operations that have been performed by time so as to obtain historical operation statistics. In one embodiment, when each passenger performs an operation of entering the call request command in the elevator call request device 200, said entry operation (including its corresponding time information) will be recorded in the entry operation receiving module 210, and the statistical analysis module 220 counts the number of entry operations that have been performed by time so as to obtain the historical operation statistics that can reflect the change in frequency of use of the elevator call request device 200 in each time period.

Still referring to Fig. 3, the elevator call request device 200 further comprises a display control module 230 which is configured to dynamically control display parameters of the touch display screen 201 by time based on the historical operation statistics. Thus the touch display screen 201 can dynamically adjust the display parameters at different times according to its own historical use, and according to the change in the frequency of use of the touch display screen 201 of each elevator call request device 200, the display parameters can be controlled in a more individualized manner, and the control of display parameters is more reasonable.

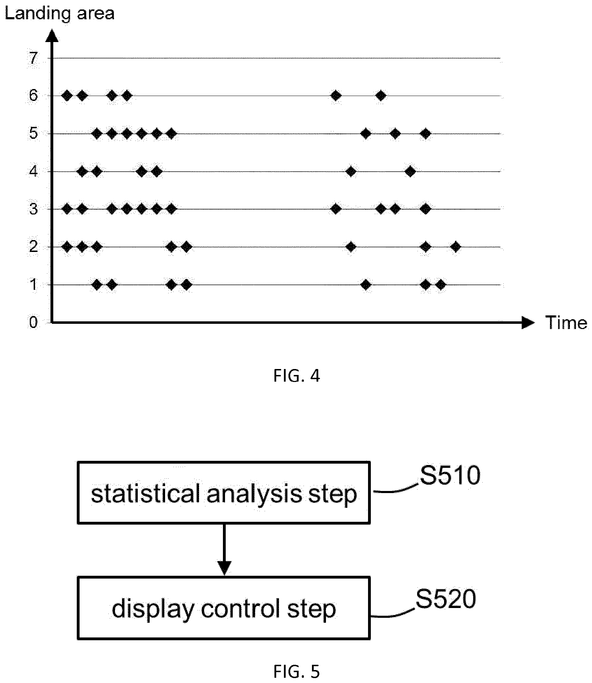

Fig. 4 is a schematic drawing of historical operation statistics obtained by elevator call request devices in different landing areas of the elevator system according to an embodiment of the present invention. As shown in Fig. 4, the statistical analysis module 220 of the elevator call request device 200 counts the number of entry operations that have been performed every day for a period of 0.5-1 hour in cluster so as to obtain daily historical operation statistics. For example, 0.5 hour is used as the unit of time period, and the number of entry operations in each time period as well as the time periods in which the number of entry operations is greater than or equal to a predetermined value (e.g. 5) are counted, then they are represented by dots. It can be seen that in different time periods of every day, the frequency of use of the elevator call request device 200 changes regularly, for example, there are obviously daily peak use period and daily trough use period.

It shall be noted that in the above operation of the statistical analysis module 220, statistics can be made for data of the same date of several months so as to obtain daily historical operation statistics of said date, or statistics can be made for data of the same day (e.g. Monday) of several weeks so as to obtain daily historical operation statistics of said day, in this way, the regularity of periodic change of the daily historical operation statistics of different dates can be accurately obtained. For example, with respect to an elevator system in an office building, it might be obtained that the peak use period on Mondays is relatively longer, and the daily trough use period is relatively shorter, and it might also be obtained that there is basically no peak use period on Saturdays and Sundays. Thus, the daily historical operation statistics of different dates can be accurately made.

Correspondingly, taking the control of brightness as an example, the display control module 230 is further configured to control the touch display screen 201 to display at a relatively high brightness in the daily peak use period and at a relatively low brightness in the daily trough use period; for example, the brightness of the touch display screen 201 is controlled to exceed a first predetermined value during the daily peak use period, so that passengers can have better user experience when entering the destination floor, and the brightness of the touch display screen 201 is controlled to be lower than a second predetermined value (the second predetermined value being smaller than the first predetermined value) during the daily trough use period so as to not only save energy but also prolong the service life of the touch display screen 201 and the elevator call request device while not affecting the passenger to enter the destination floor.

It shall be understood that different historical operation statistics might be obtained (as shown in Fig. 4) for different elevator call request devices 200, for example, different elevator call request devices 200 in different landing areas, thus display parameter controls for these elevator call request devices also differ. For example, in the landing area 1 with more passengers, the daily peak use period of the device 200₁ for making elevator calling request is longer, and the touch display screen 201 of said device 200₁ for making elevator calling request displays at high brightness in a longer time range; in the landing area n with less passengers (e.g. with fewer office workers), the daily peak use period of the device 200ₙ for making elevator calling request is shorter, and the touch display screen 201 of said device 200ₙ for making elevator calling request displays at high brightness in a shorter time range. In this way, different elevator call request devices 200 can control the display parameters according to their own historical usage data in a control manner that conforms to their own usage patterns, that is to say, the display control module 230 of each elevator call request device 200 dynamically controls the display parameters of the touch display screen 201 by time according to its own historical operation statistics, and different elevator call request devices 200 can be controlled differently, so that the respective control of display parameters is more reasonable, and the corresponding passengers' visual experience is better.

It shall be appreciated that the display parameters include, but are not limited to, brightness that has been given as an example in the above, and any display parameter that is dynamically adjustable and controllable according to different frequencies of use can be dynamically adjusted and controlled based on the above principle, such as contrast (e.g., high contrast in daily peak use period and low contrast in daily trough use period), display color (e.g. bright color in daily peak use period and relatively dark color in daily trough use period, etc.).

It shall be noted that when the display control module 230 controls the display parameters such as brightness of the touch display screen 201, the display parameters can also change linearly and dynamically with the change in the number the corresponding periods in the historical operation statistics, for example, the higher the number, the higher the brightness.

In one embodiment, the statistical analysis module 220 is further configured to periodically make the counting at a predetermined time so as to update the historical operation statistics and to obtain relatively more accurate regular pattern of use. For example, data of the number of entry operations in the previous three months are collected and analyzed periodically on a specified date of each month, so that updated and more accurate historical operation statistics can be obtained. As the historical data accumulates, the elevator call request device 200 can continuously optimize its own operation.

Still referring to Fig. 2 and Fig. 3, entry operations recorded by the entry operation receiving module 210, historical operation statistics obtained by the statistical analysis module 220 and so on can be stored in the memory 203; in the embodiment where the statistical analysis module 220 and the display control module 230 are implemented by computer programs, the memory 203 can store corresponding computer programs in advance, and the processor 202 executes said programs so that functions of the statistical analysis module 220 and the display control module 230 can be automatically achieved.

It shall be noted that in another embodiment, the display control module 220 is further configured to dynamically control display contents of the touch display screen 201 by time based on the historical operation statistics, for example, different guidance information are displayed in the daily peak use period and daily trough use period. The specific display contents are not restrictive and can be set as desired.

Fig. 5 is a flow chart of a display control method for the elevator call request device according to an embodiment of the present invention. An exemplary description of the display control method for the elevator call request device according to an embodiment of the present invention will be given below with reference to Figs. 3 and 5.

In step S510, i.e. the statistical analysis step, the number of entry operations that have been performed is counted by time so as to obtain historical operation statistics. Said step is performed in the statistical analysis module 220 as shown in Fig. 3, wherein the entry operation is the entry operation in respect of a call request command performed by the passenger on the touch display screen 201, and the call request command may specifically include the destination floor information.

In step S520, i.e. the display control step, display parameters of the touch display screen of the elevator call request device are dynamically controlled by time based on the historical operation statistics. Said step is performed in the display control module 230 as shown in Fig. 3.

Wherein, the dynamically controlled display parameters may include one or several of brightness, contrast and display color.

In still another embodiment, in the display control step S520, display contents of the touch display screen 201 are dynamically controlled by time based on the historical operation statistics. For example, different guidance information are displayed in the daily peak use period and daily trough use period.

In one embodiment, the historical operation statistics can be daily historical operation statistics, and the daily historical operation statistics may include the daily peak use period and daily trough use period. As for the "peak use" and "trough use", they can be pre-defined according to the number of entry operations.

In one embodiment, in the display control step S520, display parameters of the touch display screen 201 are dynamically controlled by time based on the daily peak use period and daily trough use period. Specifically, in the display control step, the touch display screen is controlled to display at a relatively high brightness during the daily peak use period and at a relatively low brightness during the daily trough use period.

In one embodiment, in the statistical analysis step S510, the number of entry operations that have been performed every day is counted for a period of 0.5-1 hour (e.g. 0.5 hour) in cluster so as to obtain daily historical operation statistics.

In one embodiment, the statistical analysis step S510 is performed periodically at a predetermined time to update the historical operation statistics. For example, data of the number of entry operations in the previous *m* months are collected and analyzed periodically on a specified date of each month, so that updated and more accurate historical operation statistics can be obtained. It shall be understood that as the historical data accumulates, the elevator call request device 200 can continuously optimize its own operation.

It shall be noted that the elevator call request device 200 according to the above embodiments of the present invention can be implemented by computer program instructions, for example, by special computer programs, and said computer program instructions can be provided to the processor of a general-purpose computer, a special-purpose computer or some other programmable data processing device so as to form the elevator call request device 200 according to the embodiments of the present invention, besides, units or components for realizing functions/operations specified in the flow charts and/or blocks and/or one or more flow block diagrams can be created by said instructions that are executed by the processor of the computer or some other programmable data processing device.

Moreover, said computer program instructions can be stored in a computer-readable memory and can instruct the computers or other programmable processors to achieve functions in a specific way, so that these instructions stored in the computer-readable memory form a product that includes instruction components for realizing functions/operations specified in one or more blocks of the flow chart and/or block diagram.

It shall also be noted that in some optional implementations, the functions/operations shown in the blocks may not take place in the order shown in the flow chart. For example, two blocks shown in turn may actually be concurrently implemented or they may be implemented in an inverted order sometimes, depending on the functions/operations involved.

It shall be noted that the elements disclosed and depicted herein (including flow charts and block diagrams in the drawings) refer to the logical boundaries between the elements. However, according to software or hardware engineering practice, the described elements and their functions can be implemented on a machine through a computer-executable medium, which has a processor capable of executing program instructions stored thereon, said program instructions acting as a monolithic software structure, an independent software module, or a module using external programs, codes, services, etc., or as any combination thereof, and all of these implementation schemes may fall within the scope of the present disclosure

Although different non-restrictive embodiments have specifically described components, the embodiments of the present invention are not limited to these specific combinations. Some of the components or features from any non-restrictive embodiment may be combined with components or features from any other non-restrictive embodiment.

Although specific orders of steps are shown, disclosed and required, it should be understood that the steps can be performed, separated or combined in any order, unless otherwise specified, and will still benefit from the present disclosure.

The foregoing descriptions are illustrative rather than restrictive. Various non-restrictive embodiments are disclosed herein, however, those skilled in the art will understand that, according to the above teachings, various modifications and changes will fall within the scope of the appended claims. Therefore, it shall be understood that other disclosure than the specific disclosure may be implemented within the scope of the appended claims. For this reason, the appended claims should be read to determine the true scope and content.

## Claims

1. An elevator call request device (200), comprising: a touch display screen (201) which is provided to passengers for performing an entry operation of a call request command;
**characterised in that**
the elevator call request device further comprises:
a statistical analysis module (220) configured to count the number of entry operations that have been performed by time so as to obtain historical operation statistics; and
a display control module (230) configured to dynamically control display parameters of the touch display screen (201) by time based on the historical operation statistics.

2. The elevator call request device (200) according to claim 1, wherein the display parameters include one or several of brightness, contrast and display color.

3. The elevator call request device (200) according to claim 1 or 2, wherein the display control module (230) is further configured to dynamically control display contents of the touch display screen (201) by time based on the historical operation statistics.

4. The elevator call request device (200) according to any preceding claim, wherein the historical operation statistics include daily historical operation statistics, and the daily historical operation statistics include daily peak use period and daily trough use period.

5. The elevator call request device (200) according to claim 4, wherein the display control module (230) is further configured to dynamically control display parameters of the touch display screen (201) by time based on the daily peak use period and daily trough use period.

6. The elevator call request device (200) according to claim 5, wherein the display control module (230) is further configured to control the touch display screen (201) to display at a relatively high brightness during the daily peak use period and at a relatively low brightness during the daily trough use period.

7. The elevator call request device (200) according to any preceding claim, wherein the statistical analysis module (220) is further configured to count the number of entry operations that have been performed every day for a period of 0.5-1 hour in cluster so as to obtain daily historical operation statistics; and/or
wherein the statistical analysis module (220) is further configured to periodically make the counting at a predetermined time to update the historical operation statistics.

8. The elevator call request device (200) according to any preceding claim, wherein the call request command includes destination floor information.

9. An elevator system (10), comprising an elevator controller (120), wherein said elevator system further comprises:
one or a plurality of elevator call request devices (200) according any one of claims 1-8;
wherein the elevator controller (120) is capable of receiving the call request command entered from the elevator call request device (200); and
preferably wherein the plurality of elevator call request devices (200) are installed in different landing areas (1 - n) of the elevator system (10), and the display control modules (230) of each of the elevator call request devices (200) dynamically control the display parameters of the touch display screens (201) by time according to its own historical operation statistics respectively.

10. A display control method for an elevator call request device (200), comprising:
a statistical analysis step for counting the number of entry operations that have been performed by time so as to obtain historical operation statistics, wherein the statistical analysis step is performed in a statistical analysis module (220) of the elevator call request device (200); and
a display control step for dynamically controlling display parameters of the touch display screen (201) of the elevator call request device (200) by time based on the historical operation statistics, wherein the display control step is performed in a display control module (230) of the elevator call request device (200);
wherein the entry operation is the entry operation in respect of a call request command performed by the passenger on the touch display screen (201).

11. The display control method according to claim 10, wherein the display parameters include one or several of brightness, contrast and display color; and/or
wherein the display control step includes dynamically controlling display contents of the touch display screen (201) by time based on the historical operation statistics.

12. The display control method according to claim 10 or 11, wherein the historical operation statistics include daily historical operation statistics, and the daily historical operation statistics include daily peak use period and daily trough use period, and
preferably wherein the display control step includes dynamically controlling display parameters of the touch display screen (201) by time based on the daily peak use period and daily trough use period, and
further preferably wherein the display control step includes controlling the touch display screen (201) to display at a relatively high brightness during the daily peak use period and at a relatively low brightness during the daily trough use period.

13. The display control method according to any of claims 10-12, wherein the statistical analysis step includes counting the number of entry operations that have been performed every day for a period of 0.5-1 hour in cluster so as to obtain daily historical operation statistics; and/or
wherein the statistical analysis step is periodically performed at a predetermined time to update the historical operation statistics.

## Patentansprüche

1. Aufzugsrufanforderungsvorrichtung (200), die Folgendes umfasst: einen Berührungsbildschirm (201), der Fahrgästen zum Durchführen einer Eingabeoperation eines Rufanforderungsbefehls bereitgestellt ist;
**dadurch gekennzeichnet, dass** die Aufzugsrufanforderungsvorrichtung ferner Folgendes umfasst:
ein statistisches Analysemodul (220), das konfiguriert ist, um die Anzahl von Eingabeoperationen, die nach Zeit durchgeführt wurden, zu zählen, um historische Operationsstatistiken zu erhalten; und
ein Anzeigesteuermodul (230), das konfiguriert ist, um Anzeigeparameter des Berührungsbildschirms (201) nach Zeit basierend auf den historischen Operationsstatistiken dynamisch zu steuern.

2. Aufzugsrufanforderungsvorrichtung (200) nach Anspruch 1, wobei die Anzeigeparameter eines oder mehrere von Helligkeit, Kontrast und Anzeigefarbe beinhalten.

3. Aufzugsrufanforderungsvorrichtung (200) nach Anspruch 1 oder 2, wobei das Anzeigesteuermodul (230) ferner konfiguriert ist, um Anzeigeinhalte des Berührungsbildschirms (201) dynamisch nach Zeit basierend auf den historischen Operationsstatistiken zu steuern.

4. Aufzugsrufanforderungsvorrichtung (200) nach einem der vorhergehenden Ansprüche, wobei die historischen Operationsstatistiken tägliche historische Operationsstatistiken beinhalten, und die täglichen historischen Operationsstatistiken eine tägliche Spitzennutzungsperiode und eine tägliche Tiefstnutzungsperiode beinhalten.

5. Aufzugsrufanforderungsvorrichtung (200) nach Anspruch 4, wobei das Anzeigesteuermodul (230) ferner konfiguriert ist, um Anzeigeparameter des Berührungsbildschirms (201) nach Zeit basierend auf der täglichen Spitzennutzungsperiode und täglichen Tiefstnutzungsperiode dynamisch zu steuern.

6. Aufzugsrufanforderungsvorrichtung (200) nach Anspruch 5, wobei das Anzeigesteuermodul (230) ferner konfiguriert ist, um den Berührungsbildschirm (201) zu steuern, um während der täglichen Spitzennutzungsperiode bei einer relativ hohen Helligkeit anzuzeigen und während der täglichen Tiefstnutzungsperiode bei einer relativ niedrigen Helligkeit anzuzeigen.

7. Aufzugsrufanforderungsvorrichtung (200) nach einem der vorhergehenden Ansprüche, wobei das statistische Analysemodul (220) ferner konfiguriert ist, um die Anzahl von Eingabeoperationen zu zählen, die jeden Tag für einen Zeitraum von 0,5-1 Stunde in Clustern durchgeführt wurden, um tägliche historische Operationsstatistiken zu erhalten; und/oder wobei das statistische Analysemodul (220) ferner konfiguriert ist, um das Zählen periodisch zu einer vorbestimmten Zeit durchzuführen, um die historischen Operationsstatistiken zu aktualisieren.

8. Aufzugsrufanforderungsvorrichtung (200) nach einem der vorhergehenden Ansprüche, wobei der Rufanforderungsbefehl Zielstockwerkinformationen beinhaltet.

9. Aufzugssystem (10), das eine Aufzugssteuereinheit (120) umfasst, wobei das Aufzugssystem ferner Folgendes umfasst:
eine oder eine Vielzahl von Aufzugsrufanforderungsvorrichtungen (200) nach einem der Ansprüche 1-8;
wobei die Aufzugssteuereinheit (120) in der Lage ist, den Rufanforderungsbefehl, der von der Aufzugsrufanforderungsvorrichtung (200) eingegeben wird, zu empfangen; und
wobei bevorzugt die Vielzahl von Aufzugsrufanforderungsvorrichtungen (200) in unterschiedlichen Treppenabsatzbereichen (1 - n) des Aufzugssystems (10) installiert ist, und die Anzeigesteuermodule (230) jeder der Aufzugsrufanforderungsvorrichtungen (200) die Anzeigeparameter der Berührungsbildschirme (201) dynamisch nach Zeit gemäß ihren eigenen historischen Operationsstatistiken zu steuern.

10. Anzeigesteuerverfahren für eine Aufzugsrufanforderungsvorrichtung (200), das Folgendes umfasst:
einen statistischen Analyseschritt zum Zählen der Anzahl von Eingabeoperationen, die nach Zeit durchgeführt wurden, um historische Operationsstatistiken zu erhalten, wobei der statistische Analyseschritt in einem statistischen Analysemodul (220) der Aufzugsrufanforderungsvorrichtung (200) durchgeführt wird; und
einen Anzeigesteuerschritt zum dynamischen Steuern von Anzeigeparametern des Berührungsbildschirms (201) der Aufzugsrufanforderungsvorrichtung (200) nach Zeit basierend auf den historischen Operationsstatistiken, wobei der Anzeigesteuerschritt in einem Anzeigesteuermodul (230) der Aufzugsrufanforderungsvorrichtung (200) durchgeführt wird;
wobei die Eingabeoperation die Eingabeoperation in Bezug auf einen Anrufanforderungsbefehl ist, der von dem Fahrgast auf dem Berührungsbildschirm (201) durchgeführt wird.

11. Anzeigesteuerverfahren nach Anspruch 10, wobei die Anzeigeparameter eines oder mehrere von Helligkeit, Kontrast und Anzeigefarbe beinhalten; und/oder
wobei der Anzeigesteuerschritt das dynamische Steuern von Anzeigeinhalten des Berührungsbildschirms (201) nach Zeit basierend auf den historischen Operationsstatistiken beinhaltet.

12. Anzeigesteuerverfahren nach Anspruch 10 oder 11, wobei die historischen Operationsstatistiken tägliche historische Operationsstatistiken beinhalten, und die täglichen historischen Operationsstatistiken eine tägliche Spitzennutzungsperiode und eine tägliche Tiefstnutzungsperiode beinhalten, und
wobei bevorzugt der Anzeigesteuerschritt das dynamische Steuern von Anzeigeparametern des Berührungsbildschirms (201) nach Zeit basierend auf der täglichen Spitzennutzungsperiode und der täglichen Tiefstnutzungsperiode beinhaltet, und
wobei weiter bevorzugt der Anzeigesteuerungsschritt das Steuern des Berührungsbildschirms (201) beinhaltet, um während der täglichen Spitzennutzungsperiode mit einer relativ hohen Helligkeit und während der täglichen Tiefstnutzungsperiode mit einer relativ niedrigen Helligkeit anzuzeigen.

13. Anzeigesteuerverfahren nach einem der Ansprüche 10-12, wobei der statistische Analyseschritt das Zählen der Anzahl von Eingabeoperationen beinhaltet, die jeden Tag während einer Periode von 0,5-1 Stunde in Clustern durchgeführt wurden, um tägliche historische Operationsstatistiken zu erhalten; und/oder
wobei der statistische Analyseschritt periodisch zu einer vorbestimmten Zeit durchgeführt wird, um die historischen Operationsstatistiken zu aktualisieren.

## Revendications

1. Dispositif de demande d'appel d'ascenseur (200), comprenant :
un écran d'affichage tactile (201) qui est fourni aux passagers pour effectuer une opération de saisie d'une commande de demande d'appel ;
**caractérisé en ce que** le dispositif de demande d'appel d'ascenseur comprend en outre :
un module d'analyse statistique (220) configuré pour compter le nombre d'opérations de saisie qui ont été effectuées dans le temps afin d'obtenir des statistiques d'opérations historiques ; et
un module de commande d'affichage (230) configuré pour commander dynamiquement les paramètres d'affichage de l'écran d'affichage tactile (201) à temps sur la base des statistiques d'opérations historiques.

2. Dispositif de demande d'appel d'ascenseur (200) selon la revendication 1, dans lequel les paramètres d'affichage comportent un ou plusieurs paramètres parmi la luminosité, le contraste et la couleur d'affichage.

3. Dispositif de demande d'appel d'ascenseur (200) selon la revendication 1 ou 2, dans lequel le module de commande d'affichage (230) est en outre configuré pour commander dynamiquement le contenu d'affichage de l'écran d'affichage tactile (201) à temps sur la base des statistiques d'opérations historiques.

4. Dispositif de demande d'appel d'ascenseur (200) selon une quelconque revendication précédente, dans lequel les statistiques d'opérations historiques comportent des statistiques d'opérations historiques quotidiennes, et les statistiques d'opérations historiques quotidiennes comportent une période d'utilisation maximale quotidienne et une période d'utilisation minimale quotidienne.

5. Dispositif de demande d'appel d'ascenseur (200) selon la revendication 4, dans lequel le module de commande d'affichage (230) est en outre configuré pour commander dynamiquement les paramètres d'affichage de l'écran d'affichage tactile (201) à temps sur la base de la période d'utilisation maximale quotidienne et de la période d'utilisation minimale quotidienne.

6. Dispositif de demande d'appel d'ascenseur (200) selon la revendication 5, dans lequel le module de commande d'affichage (230) est en outre configuré pour commander l'écran d'affichage tactile (201) pour afficher à une luminosité relativement élevée pendant la période d'utilisation maximale quotidienne et à une luminosité relativement faible pendant la période d'utilisation minimale quotidienne.

7. Dispositif de demande d'appel d'ascenseur (200) selon une quelconque revendication précédente, dans lequel le module d'analyse statistique (220) est en outre configuré pour compter le nombre d'opérations de saisie qui ont été effectuées chaque jour pendant une période de 0,5 à 1 heure en grappe afin d'obtenir des statistiques d'opérations historiques quotidiennes ; et/ou
dans lequel le module d'analyse statistique (220) est en outre configuré pour effectuer périodiquement le comptage à un moment prédéterminé pour mettre à jour les statistiques d'opérations historiques.

8. Dispositif de demande d'appel d'ascenseur (200) selon une quelconque revendication précédente, dans lequel la commande de demande d'appel comporte des informations d'étage de destination.

9. Système d'ascenseur (10), comprenant un dispositif de commande d'ascenseur (120), dans lequel ledit système d'ascenseur comprend en outre :
un ou une pluralité de dispositifs de demande d'appel d'ascenseur (200) selon l'une quelconque des revendications 1 à 8 ;
dans lequel le dispositif de commande d'ascenseur (120) est capable de recevoir la commande de demande d'appel saisie depuis le dispositif de demande d'appel d'ascenseur (200) ; et
de préférence dans lequel la pluralité de dispositifs de demande d'appel d'ascenseur (200) sont installés dans différentes zones de palier (1 - n) du système d'ascenseur (10), et les modules de commande d'affichage (230) de chacun des dispositifs de demande d'appel d'ascenseur (200) commandent dynamiquement les paramètres d'affichage des écrans d'affichage tactiles (201) à temps selon ses propres statistiques d'opérations historiques, respectivement.

10. Procédé de commande d'affichage pour un dispositif de demande d'appel d'ascenseur (200), comprenant :
une étape d'analyse statistique pour compter le nombre d'opérations de saisie qui ont été effectuées à temps afin d'obtenir des statistiques d'opérations historiques, dans lequel l'étape d'analyse statistique est effectuée dans un module d'analyse statistique (220) du dispositif de demande d'appel d'ascenseur (200) ; et
une étape de commande d'affichage pour commander dynamiquement les paramètres d'affichage de l'écran d'affichage tactile (201) du dispositif de demande d'appel d'ascenseur (200) à temps sur la base des statistiques d'opérations historiques, dans lequel l'étape de commande d'affichage est effectuée dans un module de commande d'affichage (230) du dispositif de demande d'appel d'ascenseur (200) ;
dans lequel l'opération de saisie est l'opération de saisie concernant une commande de demande d'appel exécutée par le passager sur l'écran d'affichage tactile (201).

11. Procédé de commande d'affichage selon la revendication 10, dans lequel les paramètres d'affichage comportent un ou plusieurs paramètres parmi la luminosité, le contraste et la couleur d'affichage ; et/ou
dans lequel l'étape de commande d'affichage comporte la commande dynamique du contenu d'affichage de l'écran d'affichage tactile (201) à temps sur la base des statistiques d'opérations historiques.

12. Procédé de commande d'affichage selon la revendication 10 ou 11, dans lequel les statistiques d'opérations historiques comportent des statistiques d'opérations historiques quotidiennes, et les statistiques d'opérations historiques quotidiennes comportent une période d'utilisation maximale quotidienne et une période d'utilisation minimale quotidienne, et
de préférence dans lequel l'étape de commande d'affichage comporte la commande dynamique des paramètres d'affichage de l'écran d'affichage tactile (201) à temps sur la base de la période d'utilisation maximale quotidienne et de la période d'utilisation minimale quotidienne, et
en outre de préférence dans lequel l'étape de commande d'affichage comporte la commande de l'écran d'affichage tactile (201) pour afficher à une luminosité relativement élevée pendant la période d'utilisation maximale quotidienne et à une luminosité relativement faible pendant la période d'utilisation minimale quotidienne.

13. Procédé de commande d'affichage selon l'une quelconque des revendications 10 à 12, dans lequel l'étape d'analyse statistique comporte le comptage du nombre d'opérations de saisie qui ont été effectuées chaque jour pendant une période de 0,5 à 1 heure en grappe afin d'obtenir des statistiques d'opération historiques quotidiennes ; et/ou
dans lequel l'étape d'analyse statistique est exécutée périodiquement à un moment prédéterminé pour mettre à jour les statistiques d'opérations historiques.
